# EUROPÄISCHE PATENTSCHRIFT

(11) **EP 0 821 454 B1**
(45) Veröffentlichungstag und Bekanntmachung des Hinweises auf die Patenterteilung: **30.01.2002**
(21) Anmeldenummer: 97102729.7
(22) Anmeldetag: 20.02.1997
(51) Int. Cl.: H02B 1/052, H02B 1/056

(54) **Anschlussvorrichtung für elektrische Installationsgeräte**
Connecting device for electrical installation apparatus
Dispositif de raccordement pour installation électrique

(30) Priorität: 18.07.1996 DE 19628957
(43) Veröffentlichungstag der Anmeldung: 28.01.1998
(73) Patentinhaber: ABB PATENT GmbH, 68526 Ladenburg (DE)
(72) Erfinder: van Hoorn, Rob, 6721 GA Bennekom (NL); Terpstra, Jan, 6710 XC Ede (NL)
(74) Vertreter: Rupprecht, Klaus, Dipl.-Ing.

(56) Entgegenhaltungen:
- EP-A- 0 639 877
- WO-A-93/04514
- GB-A- 2 036 437
- US-A- 4 446 503

## Beschreibung

Die Erfindung betrifft eine in einen Installationsverteiler einbaubare Anschlußvorrichtung für elektrische Installationsgeräte, insbesondere für Leitungsschutzschalter oder Fehlerstromschutzschalter oder dgl., nach dem Oberbegriff des Anspruches 1.

Eine Vorrichtung der eingangs genannten Art, mit der elektrische Energie zu wenigstens einem elektrischen Installationsgerät oder Installationsschaltgerät zugeführt werden kann, ist aus der EP 0 639 877 A1 bekannt geworden. Diese Vorrichtung besitzt ein Gehäuse, in dem Sammelschienen aufgenommen sind und das auf seiner Außenseite Leisten aufweist, die miteinander eine Hutprofilschiene bilden, auf der die Installationsgeräte oder Leitungsschutzschalter aufgeschnappt werden können. Am Boden des Installationsgerätes befindet sich ein U-förmiges Klemmenteil, dessen U-Kontur parallel zu der Hutprofilschienenkante, um die das Installationsgerät beim Aufschnappen geschwenkt wird, verläuft. Innerhalb des Gehäuses befinden sich die Sammelschienen, deren Anschlußfahnen senkrecht zu der Befestigungsebene verlaufen und phasenweise in einer Ebene bzw. deren freie Endkanten auf einer Linie liegen, die ebenfalls parallel zu der besagten Schwenkachse verläuft; beim Aufsetzen des Installationsgerätes gleitet das Klemmteil durch Öffnungen auf die Fahnen auf. Es besteht auch die Möglichkeit, am Boden des Installationsgerätes eine in sich federnde Fahne anzubringen, die in Öffnungen eingreift, die langgestreckt rechteckig sind und deren längere Seite parallel zu der besagten Schwenkachse verläuft. Die Federwirkung des Klemmteiles am Installationsgerät verläuft senkrecht zu der besagten Schwenkachse.

Die Unterbringung der Sammelschienen innerhalb des Gehäuses sowie das Einschwenken und damit das Kontaktieren sind etwas nachteilig wegen Toleranzproblemen.

Aus der WO 94/08375 ist eine Verteilvorrichtung bekannt geworden, die einen Träger, eine Abdeckung und eine Rückseitenwand aufweist, auf denen Leitungsschutzschalter aufgebracht sein können. Der Träger haltert die Sammelschienen, die Fahnen besitzen, die parallel zu der Ebene der Sammelschienen abgekröpft sind und in einer Ebene liegen, die parallel zur Sammelschienenebene verläuft. Sie verlaufen auch senkrecht zur Längserstreckung der Sammelschienen und zwar wechselweise nebeneinander. An dem einen Ende jeder Sammelschiene werden Anschlußleiter angebracht, beispielsweise angeschweißt oder angeschraubt oder dgl. Die Fahnen an den Sammelschienen werden von Kontaktklemmen an den Leitungsschutzschaltern beidseitig umfaßt. Das Zusammenwirken der Verteilvorrichtung mit den Leitungsschutzschaltern ist aus der WO 94/08375 nicht ersichtlich; eine hutprofilschienenartige Anordnung ist ebenfalls nicht vorhanden.

Aus der WO 93/04514 ist eine Verteilvorrichtung der eingangs genannten Art bekannt geworden, bei der eine Hutprofiltragschiene an einer Traganordnung fixiert ist, die ein Gehäuse für die Sammelschiene sowie für Anschlußkontakte und zwei Endgehäuse aufweist, wobei die Hutprofiltragschiene und das Gehäuse für die Sammelschiene an den beiden in Abstand zueinander angeordneten Endkörpern festgerastet sind. Am Installationsgerät ist an dessen Boden eine Anschlußfahne vorgesehen, die in einer Ebene liegt, die parallel zur Längserstreckung der Hutprofiltragschiene verläuft. Aus diesem Grund ist bei ungünstiger Toleranzlage das Einfügen dieser Anschlußfahne in den entsprechenden Gegenkontakt im Gehäuse für die Sammelschiene nicht ohne weiteres möglich.

Aus der GB 2036437 A ist eine Verteilvorrichtung bekannt geworden, bei der ein Basisgehäuse zur Aufnahme von Sammelschienen auf einer Metallplatte befestigt ist; das Basisgehäuse wird mittels zwei Abdeckungen abgedeckt und an dem Installationsschaltgerät angebrachte Anschlußfahnen greifen in Anschlußkontakte an den Sammelschienen ein. Die Fixierung des Schaltgerätes erfolgt nicht an einer Hutprofiltragschiene, sondern an Halterungselementen an der Metallplatte bzw. am Basisgehäuse.

Aufgabe der Erfindung ist es, eine Anschluß- oder Verteilvorrichtung der eingangs genannten Art zu schaffen, bei der die Nachteile der bekannten Einrichtungen vermieden sind.

Diese Aufgabe wird erfindungsgemäß gelöst durch die kennzeichnenden Merkmale des Anspruches 1.

Die Erfindung ist also dadurch gekennzeichnet, daß die Anschlußkontaktstücke oder Gegenkontaktstücke eine U-Form besitzen, die in Richtung "Einkontaktieren" offen ist und deren Schenkel in diese Richtung und senkrecht zur Längsrichtung der Normprofiltragschiene verlaufen, daß die dazu passenden Gegenkontaktstücke als Fahnen ausgebildet sind, deren Erstreckung parallel zu den Seitenwänden des Installationsgerätes bzw. senkrecht zur Längserstreckung der Normprofiltragschiene verläuft, und daß das jeweils andere Kontaktstück U-förmig so ausgebildet ist, daß es die zugehörige Fahne beidseitig umfaßt.

Wenn die Anschlußkontaktstücke oder Gegenkontaktstücke steckfahnenartig ausgebildet sind, deren Erstreckung parallel zu den Seitenflächen des Installationsgerätes oder senkrecht zu der Normprofiltragschiene verläuft und das jeweils andere Kontaktstück U-förmig ausgebildet ist, so daß es die zugehörige Fahne beidseitig umfaßt, dann ist das Einstecken bzw. das Aufbringen von Installationsgeräten auf die Verteilvorrichtung einfach: das Installationsgerät wird um eine Kante der Hutprofiltragschiene verschwenkt und die als Steckanschlußkontaktstücke ausgebildeten Anschlußkontaktstücke greifen dann in die entsprechenden Gegenkontaktstücke ein. Dadurch, daß die Anschlußkontaktstücke senkrecht zur Hutprofiltragschiene ausgerichtet sind, bestehen Toleranzprobleme in Richtung quer zur Hutprofiltragschiene nicht. Die Anschlußkontaktstücke gelangen dann mit den Gegenkontaktstücken in Eingriff, unabhängig davon, welchen Abstand die Anschlußkontaktstücke bzw. Gegenkontaktstücke von der Schwenkkante an der Hutprofiltragschiene aufweisen; solche unterschiedlichen Abstände können durch ungünstige Toleranzen bedingt sein. Die Anschlußkontaktstücke am Installationsschaltgertät sind in bevorzugter Weise steckfahnenartig ausgebildet.

Gemäß der Ausführung nach Anspruch 2 sind die freien Endkanten der Anschlußkontaktstücke oder der Schenkel der U-Form in einem spitzen Winkel zur Ebene der Normprofiltragschiene geneigt; damit wird erreicht, daß beim Einfahren die Anschlußkontaktstücke die U-Form über ihre gesamte Endkante gleichzeitig kontaktieren.

Dabei können die Anschlußkontaktstücke, die als Anschlußfahnen ausgebildet sind, eine unterschiedliche Länge aufweisen, so daß bei zwei vorhandenen Fahnen diese zu unterschiedlichen Zeiten bei der Montage das Gegenkontaktstück kontaktieren.

Zur Führung des Installationsgerätes an der Vorrichtung sind gemäß Anspruch 4 einander entsprechende Nasen am Installationsgerät bzw. Ausnehmungen am Basisgehäuse vorgesehen. Darüberhinaus kann gemäß Anspruch 6 auf der Sammelschienenseite des Basisgehäuses eine umschlossene Öffnung vorgesehen sein, in die eine weitere Nase am Boden des Installationsgerätes einsteckbar ist.

Es können dabei eine Sammelschiene für eine einphasige Anordnung und eine Nulleiter-Sammelschiene vorgesehen sein; selbstverständlich können auch mehr, vorzugsweise drei Sammelschienen vorgesehen sein, die je einer Phase zuzuordnen sind.

An den Sammelschienen können Netzleiter angeschlossen sein, die festgeschweißt oder festgeschraubt sind.

In zweckmäßiger Weise sind die Sammelschienen und auch die Nulleiterschiene Flachbandleiter, die senkrecht dazu vorspringende Anschlußfahnen aufweisen, an denen die Gegenkontaktstücke befestigt sind.

Das Basisgehäuse ist dabei so ausgebildet, daß unmittelbar unterhalb der Hutprofiltragschiene ein Leerraum vorgesehen ist, wenn lediglich eine Sammelschiene, die einer Phase zugeordnet ist, vorgesehen ist; in diesen Leerraum können natürlich auch weitere Sammelschienen, die anderen Phasen zuzuordnen sind, untergebracht werden. Es besteht dabei auch die Möglichkeit, daß die einzelnen Sammelschienen durch am Boden des Basisgehäuses angeformte Trennwände voneinander getrennt sind.

Wenn das Basisgehäuse eine Hutprofiltragschiene aufweist, dann ist die Hutprofiltragschiene in zweckmäßiger Weise am Basisgehäuse angeformt.

Es besteht natürlich auch die Möglichkeit, daß ein Basisgehäuse ohne Normprofiltragschiene vorgesehen ist; zu diesem Zweck ist ein Geräteträger vorgesehen, der eine derartige Normprofiltragschiene aufweist, die selbstverständlich auch einstückig am Geräteträger angeformt sein kann.

Es besteht weiterhin die Möglichkeit, anstatt Netzleiter an den Sammelschienen zu befestigen, einen Hauptsicherungsschutzschalter vorzusehen, an dem die Netzleiter angeschlossen sind und der an seinem Boden den Anschlußkontaktstücken entsprechende Anschlußfahnen aufweist, die in Gegenkontaktstücke an den Sammelschienen einsteckbar sind.

Weitere vorteilhafte Ausgestaltungen und Verbesserungen der Erfindung sind den weiteren Unteransprüchen zu entnehmen.

Anhand der Zeichnung, in der einige Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Fig. 1: eine teilweise Schnittansicht einer erfindungsgemäßen Ausführung, gemäß Schnittlinie I-I der Fig. 2, mit aufgeschnapptem Leitungsschutzschalter,
- Fig. 2: eine Aufsicht auf eine erfindungsgemäße Anschlußvorrichtung,
- Fig. 3: eine Schnittansicht gemäß Schnittlinie III-III der Fig. 4,
- Fig. 4: eine Einsicht in die Anschlußvorrichtung gemäß Fig. 2 mit Anschlußleitungen,
- Fig. 5: den unteren Bereich eines Leitungsschutzschalters,
- Fig. 6: eine Anschlußvorrichtung teilweise geschnitten, entsprechend Schnittlinie I-I der Fig. 2, mit einem Leitungsschutzschalter, der gerade auf die Anschlußvorrichtung aufgesetzt wird,
- Fig. 7: einen Installationsträger, auf den eine Anschlußvorrichtung gemäß einer weiteren Ausführungsform aufsetzbar ist,
- Fig. 8: eine Schnittansicht gemäß Schnittlinie VIII-VIII der Fig. 7,
- Fig. 9: eine Ansicht des Trägers gemäß Pfeilrichtung IX-IX der Fig. 7,

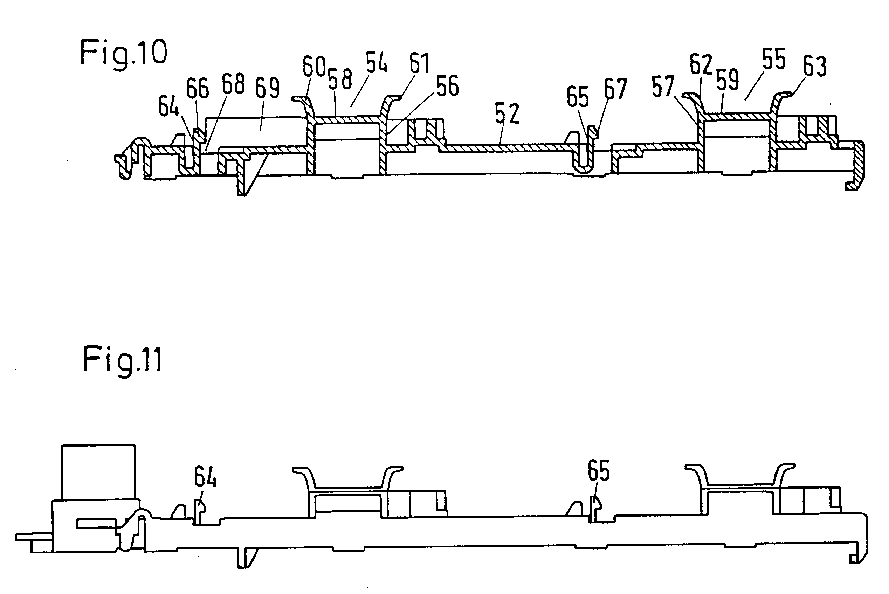

- Fig. 10: eine Schnittansicht gemäß der Schnittlinie X-X der Fig. 7,
- Fig. 11: eine Ansicht gemäß Pfeilrichtung XI-XI der Fig. 7, und
- Fig. 12: eine Einsicht in eine weitere Ausführungsform der Erfindung, ähnlich der der Fig. 4.

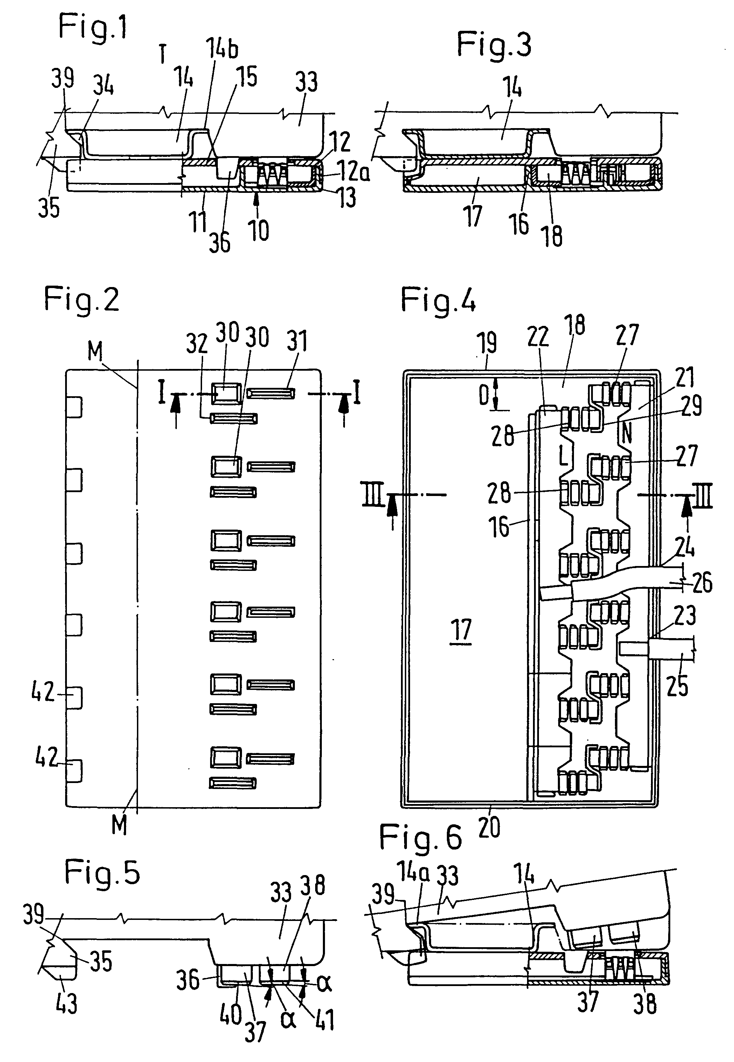

Es sei nun Bezug genommen auf die Fig. 1. Diese zeigt ein Verteilergehäuse 10, das aus einem Gehäuseunterteil 11 und einem Gehäuseoberteil 12 besteht, die napfartig ausgebildet sind und sich an ihrem Umfang umfassen. Auf der oberen Fläche des oberen Gehäuseteils 12, welches mit seinem Rand 12a den Rand 13 des unteren Gehäuseteiles 11 umfaßt, ist eine Hutprofilschiene 14 befestigt (die Art der Befestigung ist nicht gezeigt), die selbstverständlich auch an diesem Oberteil 12 angeformt sein kann.

Das Gehäuseunterteil 11 besitzt, wie aus den Fig. 3 und 4 ersichtlich ist, etwa im mittleren Bereich einen Steg oder Trennwand 16, der einen Leerraum 17, der sich unterhalb der Hutprofilschiene 14 befindet, von einem Raum 18 trennt, in dem Sammelschienen (siehe weiter unten) untergebracht sind. Diese Trennwand 16 endet, wie aus Fig. 4 ersichtlich ist, in einem Abstand D von der Schmalkante 19, wogegen sie an der entgegengesetzten Schmalkante 20 direkt an den Rand anschließt.

In dem Raum rechts der Trennwand 16 sind zwei Sammelschienen 21 und 22 eingesetzt, wobei die an der Längsseitenwand anschließende Sammelschiene 21 dem Neutralleiter N und die Sammelschiene 22 einem Phasenleiter L zugeordnet sind. Durch Öffnungen 23 und 24 in der den Raum 18 nach außen abgrenzenden Längsseitenwand der Ränder 12a, 13 sind Anschlußleiter 25 und 26 eingeführt, von denen der Anschlußleiter 25 mit der Sammelschiene 21 und der Anschlußleiter 26 mit der Sammelschiene 22 verbunden ist.

An den Sammelschienen 21 und 22 sind in bestimmtem Abstand U-förmige Anschlußkontaktstücke 27 und 28 angeformt, die gegeneinander versetzt sind, dergestalt, daß die senkrecht zur Sammelschiene 21 verlaufende Anschlußfahne 27 näher an der Schmalkante 19 liegt als die Anschlußfahne 28 der Sammelschiene 22; die freien Enden der Anschlußfahnen 27, 28 überlappen sich und zur Isolierung der beiden ist dazwischen ein etwa S-förmiger, isolierender Einsatz 29 vorgesehen, so daß zwischen der Anschlußfahnen 27 und 28 ein Kurzschluß vermieden ist.

Die Einsätze 29, auch Isolierzwischenstücke oder Isoliertrennstücke 29 genannt, besitzen eine S-Form, wobei bei dem der Randkante 19 zugewandten bzw. benachbarten Isolierzwischenstück 29 der benachbarte Haken fehlt, was aber nicht erforderlich wäre; alle diese Isolierzwischenstücke könnten jene S-Form besitzen.

Auf dem Oberteil 15 sind Führungsöffnungen 30 vorgesehen, die in einem Abstand in einer Linie parallel zu der Längsseitenkante verlaufen, der der Breite eines Installationsgerätes entspricht. Gegeneinander versetzt, entsprechend der versetzten Anordnung der Anschlußfahnen 27 und 28 sind schlitzförmige Öffnungen 31, 32 im Gehäuseoberteil eingebracht, jeweils eine für jede Anschlußfahne 27/28 (bei der Ausführung nach den Fig. 2 und 4 insgesamt sechs Paare, ebenso viele wie Anschlußfahnenpaare), die ebenfalls schräg gegeneinander versetzt sind. Ihre Längserstreckung verläuft parallel zur Schmalseitenkante 19 oder senkrecht zur Längserstreckung der Sammelschiene 21, 22.

An der Unterseite eines Leitungsschutzschalters 33 (siehe Fig. 1, Fig. 3, Fig. 5 und 6) ist zunächst die übliche Ausnehmung 34 vorgesehen, in der eine feststehende Nase 35 und eine bewegbare Nase (nicht gezeigt) vorgesehen sind, mit denen die Hutprofilschiene an ihren Längskanten umfaßt wird, so daß der Leitungsschutzschalter 33 auf der Hutprofilschiene fixiert ist. An der Bodenseite des Leitungsschutzschalters 33 befindet sich ein Vorsprung 36, der senkrecht zu der Bodenfläche vorspringt und in die Öffnung 30 hineingreifen kann, wodurch der Leitungsschutzschalter 32 in der Öffnung 30 geführt ist. In der Fig. 5 ist dieser Vorsprung 36 nur teilweise zu sehen. Außerdem besitzt der Leitungsschutzschalter 33 aus seiner Bodenfläche herausragende Steckanschlußfahnen 37 und 38, die versetzt hintereinander angeordnet sind, so daß die Steckanschlußfahne 37 in die Öffnung 32 und die Steckanschlußfahne 38 in die Öffnung 31 hineingreifen können.

Die U-Form der Anschlußfahnen 27 und 28, der Verlauf der Längserstreckung der langgestreckt rechteckigen Öffnungen 31, 32 und darüberhinaus auch der Verlauf der Anschlußfahnen 37 und 38 ist senkrecht zu der Längserstreckung der Hutprofilschiene 14 ausgerichtet, wodurch erreicht wird, daß Toleranzen, die beispielsweise in Doppelpfeilrichtung T (Fig. 1) vorhanden sein können, nicht zu einer Beschädigung der Kontaktstücke an den Anschlußfahnen 27 und 28 führen. Die freien Endkanten der beiden Steckanschlußfahnen 37 und 38 verlaufen je unter einem Winkel α zu einer gedachten Linie, die parallel zur Bodenfläche verläuft. Dadurch wird folgendes erreicht (siehe Fig. 6): Wenn ein Leitungsschutzschalter auf die Hutprofilschiene 14 aufgeschnappt werden soll, dann wird die der Nase 35 zugeordnete Eckkante 39 zunächst auf die in der Zeichnung Fig. 1 links befindliche Kante 14a der Hutprofilschiene 14 aufgesetzt, wobei der Leitungsschutzschalter 33 eine schräge Lage einnimmt (siehe Fig. 6). Zum Aufschnappen wird der Leitungsschutzschalter 33 um die Eckkante 39 im Uhrzeigersinn verschwenkt, so daß einerseits die der nicht gezeigten bewegbaren Nase zugeordnete Kante 14b der Hutprofilschiene 14 über die bewegbare Nase schnappt und die beiden Steckanschlußfahnen 37 und 38 zwischen die zugehörigen Kontaktstücke an den Anschlußfahnen 28, 27 eingreifen können. Damit das Einfahren auf der gesamten Breite der jeweiligen Steckanschlußfahen 37, 38 erfolgen kann, sind die freien Endkanten der Steckanschlußfahnen 37, 38 in dem Winkel α angeschrägt.

Aufgrund der unterschiedlichen Länge der Steckanschlußfahnen 37, 38 kommt die Steckanschlußfahne 37 mit dem zugehörigen Kontaktstück der Anschlußfahne 28 der Sammelschiene 22 in Berührung, nachdem die Steckanschlußfahne 38 mit dem Kontaktstück, das sich an der Anschlußfahne 27 der Sammelschiene 21 befindet, in Berührung gelangt ist. Dies ist insbesondere dann notwendig, wenn der Leitungsschutzschalter 33 ein NT-Schalter ist, in dem eine Null-Leiter-Trenn-Kontaktstelle und eine Phasenkontaktstelle untergebracht sind. Dabei muß die dem Nulleiter zugeordnete Steckanschlußfahne 38 als erste kontaktieren bzw. beim Demontieren als letzte von der Sammelschiene 21 getrennt werden.

Aus Fig. 2 ist ersichtlich, daß am Gehäuseoberteil an der Längsseite des Gehäuses, an dem sich die feste Nase 35 befindet, Aussparungen 42 liegen, in die zwecks Führung beim Einsetzen ein der festen Nase 35 zugeordneter Vorsprung 43 eingreifen kann. Der Vorsprung 43 befindet sich an der Bodenfläche des Leitungsschutzschalters 33.

Es besteht die Möglichkeit, die Anschlußleiter 25 und 26 auch an einem der Enden der Sammelschienen 21 und 22 anzuschließen. Der freie Raum 17 dient dabei für zusätzliche Sammelschienen, insbesondere wenn die Anschlußvorrichtung für eine dreiphasige Installationsverteilung vorgesehen sein soll (siehe auch weiter unten).

Die Kontaktstücke an den Anschlußfahnen 27 und 28 sind U-förmig, damit die Flachband-Steckanschlußfahnen 37 und 38 dazwischen eingreifen können. Wie diese U-förmigen Kontaktstücke ausgebildet sind, ist von sekundärer Bedeutung; es können jede Art von solchen Federkontaktelementen vorgesehen sein. In der Zeichnung Fig. 4 beispielsweise ist eine entsprechende Kontaktanordnung nicht dargestellt.

In den Fig. 1 bis 6 ist dargestellt, daß die Hutprofilschiene 14 auf der oberen Fläche des Gehäuseoberteils befestigt ist. Es besteht natürlich auch die Möglichkeit, diese Hutprofilschiene 14 wegzulassen, siehe auch weiter unten, oder die Hutprofilschiene 14 am Gehäuseoberteil direkt anzuformen.

Nachzutragen ist, daß die Hutprofilschiene 14 so angeordnet ist, daß die in der Zeichnung Fig. 1 links befindliche Kante der Hutprofilschiene 14 mit der links befindlichen Längskante des Gehäuses 10 etwa bündig abschließt, so daß die Mittelachse M-M der Hutprofilschiene etwa im Bereich der Mitte des Leerraumes 17 liegt.

Es besteht natürlich auch die Möglichkeit, ein Gehäuse auszugestalten, das lediglich den Raum 18 umfaßt. In diesem Falle würde die Trennwand 16 die linke Längskante des Gehäuses bilden.

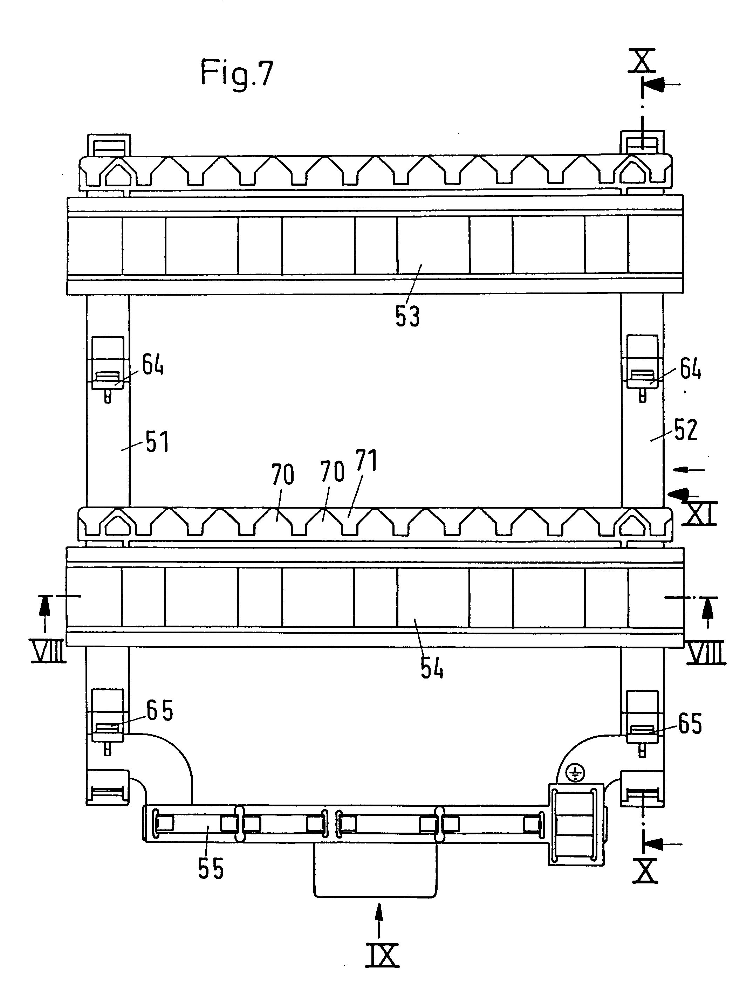

Ein Gehäuse 10 ohne Hutprofilschiene 14, in der Breite gemäß Fig. 1 und 2 oder in der Breite zwischen der rechten Längsseitenkante und der als Außenwand gebildeten Trennwand, kann auf einen Träger aufgeschnappt werden, der in der Fig. 7 in Aufsicht dargestellt ist. Der Träger besitzt zwei parallel zueinander verlaufende Traversen 51 und 52, auf denen quer dazu Trägerteile 54 und 54 angeformt sind. Die Traversen 51 und 52 enden im Bereich des Trägers 53 und überragen den Träger 54 auf seiner dem Träger 53 entgegengesetzten Seite; die freien dort befindlichen Enden der Traversen 51 und 52 sind mittels eines weiteren Trägerelementes 55 miteinander verbunden.

Der Träger 54 umfaßt eine an der Traverse 52 bzw. 51 angeschlossene Kastenform 56 und der Träger 55 eine Kastenform 57, deren obere, parallel zur Traverse 52/51 verlaufende Wandung 58 bzw. 59 die Basis für zwei Leisten 60 und 61 bzw. 62 und 63 bildet, die miteinander eine Hutprofilschiene erzeugen. In einem Abstand zu der Leiste 60 bzw. 62 befindet sich an der Traverse 52 und 51 jeweils eine Rastfahne 64 bzw. 65, die in sich federnd ausgebildet sind und eine Rastnase 66 und 67 tragen, die einen Vorsprung 68 an einem dem Gehäuse 10 entsprechenden Gehäuse 69 umgreifen können, so daß das Gehäuse 69, welches dem Gehäuse 10 in der schmalen oder breiten Ausführung entspricht, an dieser Stelle eingeschnappt werden kann. In gleicher Weise kann auch unter die Nase 67 ein Gehäuse mit einer ähnlichen Ausgestaltung wie das Gehäuse 69 aufgeschnappt werden.

Auf der der Rastfahne 64 bzw. der Befestigungsstelle für das Gehäuse 69 entgegengesetzten Seite des Trägers 54 bzw. 55 sind dachförmige, konisch ausgebildete Ausformungen 70 vorgesehen, die konische Ausnehmungen 71 zwischen sich aufnehmen, in welche den Vorsprüngen 43 entsprechende Vorsprünge an den Leitungsschutzschaltern eingreifen können und darin geführt sind.

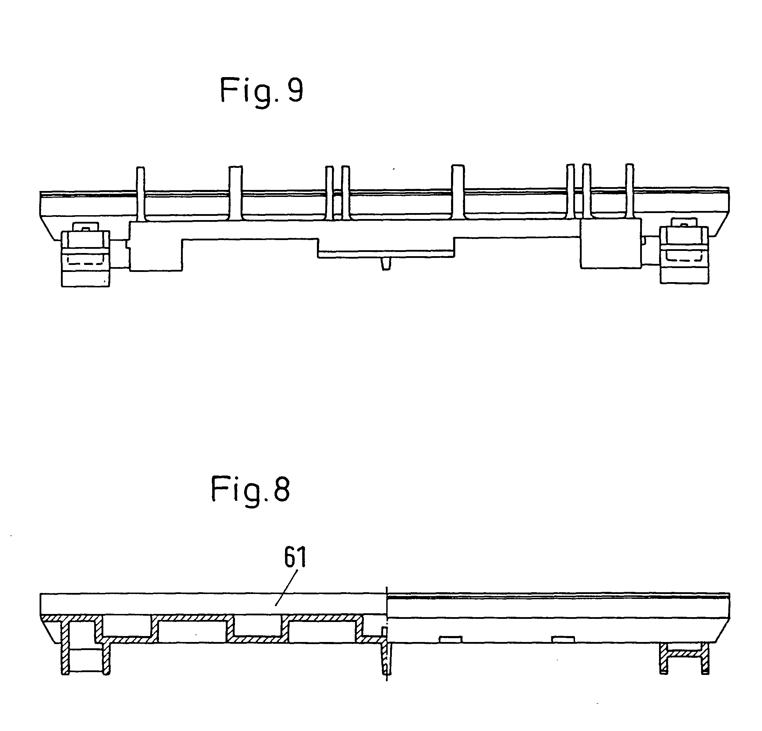

Man erkennt aus Fig. 8, daß der Wandabschnitt 58 zwischen den beiden Leisten 60 und 61 mäanderförmig ausgebildet sein kann, was zur Versteifung der Träger 53, 54 beiträgt.

Nachzutragen ist noch, daß der Raum innerhalb der Hutprofiltragschiene bei allen Ausführungen frei ist, so daß dort eine sog. EIB-Kontaktierung eingebaut werden kann.

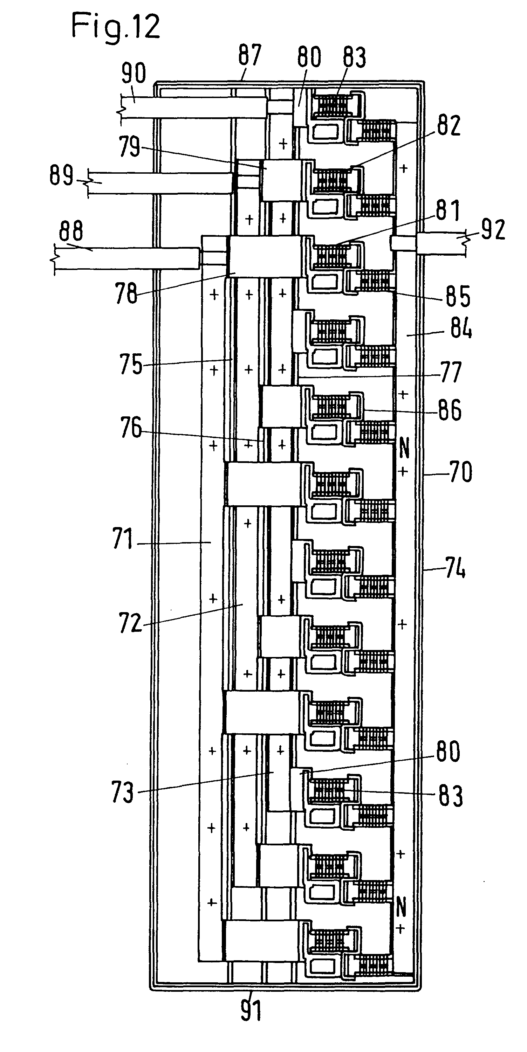

Es sei nun Bezug genommen auf die Fig. 12.

Die Fig. 12 zeigt eine Einsicht in ein Gehäuse 70, das im Prinzip dem Gehäuse 10 entspricht; im Unterschied hierzu befinden sich innerhalb des Gehäuses 70 drei aus Flachbandmaterial hergestellte Phasenleiter 71, 72 und 73, die parallel nebeneinander und parallel zur Längsseitenwand 74 verlaufen. Die Phasenleiter 71 und 72 bzw. 72 und 73 sind mittels Trennwänden 75 bzw. 76 voneinander getrennt, die ebenfalls parallel zur Längsseitenwand 74 verlaufen. Darüberhinaus besitzt das Gehäuse 70 eine Trennwandung 77, die der Trennwandung 16 entspricht.

An den Phasenschienen 71, 72 und 73 sind unterschiedlich lange Anschlußfahnen 78, 79 und 80 angeformt, die quer zur Längserstreckung der Sammelschienen 71 bis 73 verlaufen und die Trennwandung 77 überdecken und an ihren Enden mit Anschlußfahnen 81, 82 und 83 versehen sind, die den Anschlußfahnen 28 der Fig. 4 entsprechen. Direkt neben der Längsseitenwand 74 befindet sich eine Nulleiterschiene 84, die der Nulleiterschiene 21 der Fig. 4 entspricht. Die Anschlußfahnen 85 der Nulleiterschiene sind von den benachbarten Anschlußfahnen 81 bis 83 mittels eines S-förmigen Isolierteiles 86 getrennt, welches dem Isolierteil 29 entspricht. Die Sammelschienen 71, 72 und 73 sind gleich lang ausgebildet; die Sammelschienen sind dann der Teilung der Installationsgeräte entsprechend gegeneinander versetzt. An dem der oberen Schmalseitenkante 87 benachbarten Ende der Sammelschiene 71 ist ein Anschlußkabel 88 angeschlossen, an dem näher zur oberen Schmalseitenkante 87 befindlichen Ende der Sammelschiene 72 ein weiteres Kabel 89 und an dem Ende der Sammelschiene 73, welches direkt an die Schmalseitenkante 87 angrenzt, eine dritte Anschlußleitung 90. Der Abstand des Endes der Sammelschiene 71 von der oberen Schmalseitenkante 87 entspricht einer Breite von drei nebeneinander liegenden Installationsschaltgeräten; der Abstand der Sammelschiene 72 entspricht einer Breite von zwei Installationsgeräten, so daß der Abstand der drei Anschlußleiter 88, 89 und 90 untereinander der Modulbreite der Installationsgeräte entspricht. In gleicher Weise liegen die anderen Enden der Sammelschienen 71, 72 und 73 an der unteren Schmalseitenkante 91 von dieser entfernt; das untere Ende der Sammelschiene 71 grenzt an die untere Schmalseitenkante 91 an; das Ende der Sammelschiene 72 ist in einem ersten Abstand von der Schmalseitenkante 91 entfernt und das Ende der Sammelschiene 73 in einem dritten Abstand, welche Abstände ebenfalls durch die Breite der Installationsgeräte bestimmt sind.

Die Anschlußfahnen 78 überdecken die beiden benachbarten Sammelschienen 72 und 73; die Anschlußfahnen 79 lediglich die Sammelschiene 73, und die Anschlußfahnen 80 übergreifen lediglich die Trennwandung 77, so daß die zugehörigen Anschlußfahnen 81, 82 und 83 in einer Linie liegen, die parallel zur Längsseitenwand 74 verläuft.

An der Sammelschiene 84 ist ein weiteres Kabel 92 angeschlossen, in ähnlicher Weise wie das Kabel 25.

Es besteht selbstverständlich die Möglichkeit, anstatt einer Kabelzuführung wie in Fig. 12 gezeigt, die direkt an die Sammelschienen 71, 72 und 73 bzw. an die Sammelschiene 84 angelötet oder angeschraubt oder sonst wie befestigt ist, einen Hauptleitungsschutzschalter oder Hauptfehlerstromschutzschalter dem Gehäuse 70 zuzuordnen, in gleicher Weise wie die Leitungsschutzschalter 33; an der einen Anschlußklemmenseite des Hauptschalters, um die beiden Begriffe Hauptleitungsschutzschalter und Hauptfehlerstromschutzschalter unter einen einzigen Begriff zu nehmen, sind den Anschlußkabeln 88, 89 und 90 entsprechende Anschlußkabel angeschlossen; anstatt Anschlußklemmen auf der anderen Seite sind den Steckanschlußfahnen 37 und 38 entsprechende Anschlußfahnen vorgesehen, die mit den Anschlußfahnen 81, 82 und 83 in der in den Fig. 1 bis 6 dargestellten Weise in Kontaktierung gelangen können.

## Patentansprüche

1. In einen Installationsverteiler einbaubare Anschlußvorrichtung oder Verteilvorrichtung für elektrische Installationsgeräte (33), insbesondere für Leitungsschutzschalter und dgl., mit einem Basisgehäuse (10), in dem wenigstens eine Sammelschiene (21, 22) untergebracht und an dem eine Normprofiltragschiene (14), vorzugsweise eine Hutprofiltragschiene, angebracht sind, auf die die Installationsgeräte (33) aufrastbar sind, wobei an den Installationsgeräten (33) Anschlußkontaktstücke (37, 38) vorgesehen sind, die beim Aufschnappen mit der wenigstens einen Sammelschiene (21, 22) in elektrische Kontaktierung bringbar sind, wobei an der wenigstens einen Sammelschiene (21, 22) Gegenkontaktstücke (27, 28) angebracht sind, in die die Anschlußkontaktstücke (37, 38) in Eingriff bringbar sind, **dadurch gekennzeichnet, daß** die Anschlußkontaktstücke (37, 38) oder die Gegenkontaktstücke (27, 28) eine U-Form besitzen, die in Richtung "Einkontaktieren" offen ist und deren Schenkel in diese Richtung und senkrecht zur Längserstreckung der Normprofiltragschiene (14) verlaufen, und daß die Anschlußkontaktstücke oder Gegenkontaktstücke als Fahnen (37, 38) ausgebildet sind, deren Erstreckung parallel zu den Seitenwänden des Installationsgerätes (33) bzw. senkrecht zur Längserstreckung der Normprofiltragschiene verläuft, und daß das jeweils andere Kontaktstück U-förmig so ausgebildet ist, daß es die zugehörige Fahne beidseitig umfaßt.

2. Vorrichtung nach Anspruch 1, **dadurch gekennzeichnet, daß** die freien Endkanten der Fahnen (37, 38) oder der Schenkel der U-Form entweder an der wenigstens einen Sammelschiene oder dem Installationsgerät in einem spitzen Winkel zur Ebene der Normprofiltragschiene (14) oder der Bodenfläche des Installationsgerätes (33) verlaufen, damit beim Einfahren die Fahnen (37, 38) über ihre gesamte Endkante gleichzeitig über die gesamte Länge der U-Form kontaktieren.

3. Vorrichtung nach einem der vorherigen Ansprüche, **dadurch gekennzeichnet, daß** die Fahnen (37, 38) eine unterschiedliche Länge aufweisen, so daß bei zwei Fahnen diese zu unterschiedlichen Zeiten bei der Montage kontaktieren.

4. Vorrichtung nach einem der vorherigen Ansprüche, **dadurch gekennzeichnet, daß** am Boden des Installationsgerätes (33) beidseitig zur Ausnehmung, in die die Normprofiltragschiene (14) nach Aufschnappen des Installationsgerätes (33) eingreift, vorspringende Nasen angeformt sind, die jeweils in Ausnehmungen am Basisgehäuse zur Führung des Installationsgerätes (33) eingreifen.

5. Vorrichtung nach einem der vorherigen Ansprüche, bei der das Installationsgerät (33) mit einer Ecke der Ausnehmung hinter eine Kante der Normprofiltragschiene gesetzt und durch Verschwenken um diese Kante auf die Normprofiltragschiene aufgeschnappt wird, **dadurch gekennzeichnet, daß** die Ausnehmungen auf der der Sammelschiene entgegengesetzten Seite U-förmig geformt sind, wobei die offene Seite der U-Form von der Normprofiltragschiene wegweist.

6. Vorrichtung nach Anspruch 5, **dadurch gekennzeichnet, daß** die Ausnehmung auf der Sammelschienenseite des Basisgehäuses eine umschlossene Öffnung ist, in die die Nase am Boden des Installationsgerätes einsteckbar ist.

7. Vorrichtung nach einem der vorherigen Ansprüche, **dadurch gekennzeichnet, daß** wenigstens eine Sammelschiene je einer Phase zugeordnet und eine weitere Sammelschiene im Basisgehäuse untergebracht ist, die dem N-Leiter zugeordnet ist.

8. Vorrichtung nach einem der vorherigen Ansprüche, **dadurch gekennzeichnet, daß** das Installationsgerät eine Schaltkontaktstelle für eine Phase und eine Schaltkontaktstelle für den Nulleiter aufweist und die Anschlußkontaktstücke so angeordnet und ausgebildet sind, daß sie die Gegenkontaktstücke an der Nulleiter-Sammelschiene eher berühren als diejenigen an den Phasensammelschienen.

9. Vorrichtung nach einem der vorherigen Ansprüche, **dadurch gekennzeichnet, daß** an den Sammelschienen Netzleiter angeschlossen sind.

10. Vorrichtung nach Anspruch 9, **dadurch gekennzeichnet, daß** die Netzleiter festgeschweißt oder festgeschraubt sind.

11. Vorrichtung nach einem der Ansprüche 1 bis 8, **dadurch gekennzeichnet, daß** als Installationsgerät ein Hauptsicherungsschutzschalter oder Hauptfehlerstromschutzschalter vorgesehen ist, an dem die Netzleiter angeschlossen sind.

12. Vorrichtung nach einem der Ansprüche 1 bis 8, **dadurch gekennzeichnet, daß** eine in der Kontur einem Installationsschaltgerät entsprechendes Bauelement vorgesehen ist, in das die Netzleiter einmünden und das mit Anschlußkontaktstücken versehen ist, die mit den Netzleitern verbunden sind und mit den Gegenkontakten an den Sammelschienen bzw. an der Nulleiterschiene in Kontakt bringbar sind.

13. Vorrichtung nach einem der vorherigen Ansprüche, **dadurch gekennzeichnet, daß** die Sammelschienen Flachbandleiter sind, die senkrecht dazu vorspringende Fahnen aufweisen, an denen die Gegenkontaktstücke befestigt sind.

14. Vorrichtung nach einem der vorherigen Ansprüche, **dadurch gekennzeichnet, daß** das Basisgehäuse unmittelbar unterhalb der Normprofiltragschiene einen weiteren Aufnahmeraum für weitere Sammelschienen aufweist.

15. Vorrichtung nach einem der vorherigen Ansprüche, **dadurch gekennzeichnet, daß** die Normprofiltragschiene vorzugsweise als Hutprofiltragschiene am Basisgehäuse angeformt ist.

16. Vorrichtung nach einem der Ansprüche 1 bis 14, **dadurch gekennzeichnet, daß** das Basisgehäuse ohne die Normprofiltragschiene auf einen wenigstens eine Normprofiltragschiene halternden Geräteträger aufgeschnappt ist.

17. Vorrichtung nach Anspruch 16, **dadurch gekennzeichnet, daß** die Normprofiltragschiene einstückig am Geräteträger angeformt ist.

18. Vorrichtung nach einem der vorherigen Ansprüche, **dadurch gekennzeichnet, daß** die Anschlußfahnen hintereinander in einer Ebene angeordnet sind, die parallel zu den Seitenwandungen des Installationsgerätes verläuft.

19. Vorrichtung nach einem der Ansprüche 1 bis 16, **dadurch gekennzeichnet, daß** die Anschlußfahnen am Installationsgerät parallel nebeneinander angeordnet sind.

20. Vorrichtung nach einem der Ansprüche 1 bis 17, **dadurch gekennzeichnet, daß** die Anschlußfahnen versetzt hintereinander in unterschiedlichen Ebenen am Installationsgerät angeordnet sind.

## Claims

1. Connecting apparatus or distribution apparatus which can be installed in a service distribution board, for electrical service devices (33), in particular for circuit breakers and the like, having a basic housing (10) in which at least one busbar (21, 22) is accommodated and to which a standard profiled mounting rail (14), in particular a top-hat profiled mounting rail, is fitted, onto which the service devices (33) can be latched, with connecting contact pieces (37, 38) being provided on the service devices (33), which can make electrical contact with at least one busbar (21, 22) when they are snapped on, and with mating contact pieces (27, 28) being fitted on the at least one busbar (21, 22), with which the connecting contact pieces (37, 38) can be engaged, **characterized in that** the connecting contact pieces (37, 38) or the mating contact pieces (27, 28) are U-shaped, which U-shape is open in the "make contact" direction, and whose limbs run in this direction and at right angles to the longitudinal extent of the standard profiled mounting rail (14), and **in that** the connecting contact pieces or mating contact pieces are in the form of tabs (37, 38) whose extent runs parallel to the side walls of the service device (33) and at right angles to the longitudinal extent of the standard profiled mounting rail, and **in that** the respective other contact piece is U-shaped such that it engages on both sides of the associated tab.

2. Apparatus according to Claim 1, **characterized in that** the free end edges of the tabs (37, 38) or of the limbs of the U-shape either on the at least one busbar or the service device run at an acute angle to the plane of the standard profiled mounting rail (14) or to the bottom surface of the service device (33), in order that, when they are inserted, the tabs (37, 38) simultaneously make contact over the entire end edge with the entire length of the U-shape.

3. Apparatus according to one of the preceding claims, **characterized in that** the tabs (37, 38) have a different length, so that, if there are two tabs, they make contact at different times when being mounted.

4. Apparatus according to one of the preceding claims, **characterized in that** projecting lugs are integrally formed on the bottom of the service device (33), on both sides of the recess in which the standard profiled mounting rail (14) engages after the service device (33) has been snapped on, and in each case engage in recesses on the base housing in order to guide the service device (33).

5. Apparatus according to one of the preceding claims, in which the service device (33) is fitted with one corner of the recess behind one edge of the standard profiled mounting rail, and is snapped onto the standard profiled mounting rail while being pivoted about this edge, **characterized in that** the recesses on the side facing away from the busbar are U-shaped, with the open side of the U-shape pointing away from the standard profiled mounting rail.

6. Apparatus according to Claim 5, **characterized in that** the recess on the busbar side of the base housing is an enclosed opening into which the lug on the bottom of the service device can be inserted.

7. Apparatus according to one of the preceding claims, **characterized in that** each phase has at least one associated busbar, and a further busbar is accommodated in the base housing, and is associated with the neutral conductor.

8. Apparatus according to one of the preceding claims, **characterized in that** the service device has a switching contact point for one phase and a switching contact point for the neutral conductor, and the connecting contact pieces are arranged and designed such that they touch the mating contact pieces of the neutral conductor busbar before those of the phase busbars.

9. Apparatus according to one of the preceding claims, **characterized in that** mains conductors are connected to the busbars.

10. Apparatus according to Claim 9, **characterized in that** the mains conductors are welded or screwed tight.

11. Apparatus according to one of Claims 1 to 8, **characterized in that** a main protective circuit breaker or main fault-current circuit breaker is provided as the service device to which the mains conductors are connected.

12. Apparatus according to one of Claims 1 to 8, **characterized in that** a component whose contour corresponds to that of a service switching device is provided, into which the mains conductors open and which is provided with connecting contact pieces which are connected to the mains conductors and with which mating contacts on the busbars or on the neutral conductor rail can make contact.

13. Apparatus according to one of the preceding claims, **characterized in that** the busbars are flat ribbon conductors, which have tabs projecting at right angles to them, to which the mating contact pieces are attached.

14. Apparatus according to one of the preceding claims, **characterized in that** the base housing has a further accommodation area, for further busbars, immediately underneath the standard profiled mounting rail.

15. Apparatus according to one of the preceding claims, **characterized in that** the standard profiled mounting rail is preferably integrally formed as a top-hat profiled mounting rail on the base housing.

16. Apparatus according to one of Claims 1 to 14, **characterized in that** the base housing is snapped, without any standard profiled mounting rail, onto a device support which holds at least one standard profiled mounting rail.

17. Apparatus according to Claim 16, **characterized in that** the standard profiled mounting rail is integrally formed on the device support.

18. Apparatus according to one of the preceding claims, **characterized in that** the connecting tabs are arranged one behind the other in a plane which runs parallel to the side walls of the service device.

19. Apparatus according to one of Claims 1 to 16, **characterized in that** the connecting tabs are arranged parallel alongside one another on the service device.

20. Apparatus according to one of Claims 1 to 17, **characterized in that** the connecting tabs are arranged offset one behind the other in different planes on the service device.

## Revendications

1. Dispositif de raccordement ou de répartition pour des appareils électriques d'installation (33), en particulier des disjoncteurs de protection de lignes ou appareils analogues, pour montage dans un répartiteur d'installation, comprenant un boîtier de base (10) dans lequel se trouve au moins une barre collectrice (21, 22) et sur lequel est fixé un rail de support à profil normalisé (14), de préférence un rail de support à profil en oméga, sur lequel les appareils d'installation (33) peuvent être encliquetés, les appareils d'installation (33) comportant des pièces de contact de raccordement (37, 38) qui, lors de l'encliquetage, peuvent être amenées en contact électrique avec la barre collectrice (21, 22), la barre collectrice (21, 22) comportant des contre-pièces de contact (27, 28) dans lesquelles les pièces de contact de raccordement (37, 38) peuvent être mises en prise, **caractérisé par le fait que** les pièces de contact de raccordement (37, 38) ou les contre-pièces de contact (27, 28) présentent une forme en U qui est ouverte dans la direction "établissement de contact" et dont les ailes s'étendent dans cette direction et perpendiculairement à la longueur du rail de support à profil normalisé (14), et que chaque pièce de contact de raccordement (37, 38) ou contre-pièce de contact (27, 28) est réalisée sous forme de lame plate (37, 38) disposée dans un plan parallèle aux parois latérales de l'appareil d'installation (33) et perpendiculaire à la longueur du rail de support à profil normalisé, et que l'autre pièce de contact est réalisée en U de telle manière qu'elle entoure sur les deux côtés opposés la lame correspondante.

2. Dispositif suivant la revendication 1, **caractérisé par le fait que** les arêtes d'extrémité libre des lames (37, 38) ou les ailes de la forme en U s'étendent soit sur la barre collectrice soit sur l'appareil d'installation sous un angle aigu par rapport au plan du rail de support à profil normalisé (14) ou de la surface de fond de l'appareil d'installation (33) afin que lors de l'engagement les lames (37, 38) établissent le contact sur toute leur arête d'extrémité simultanément sur toute la longueur de la forme en U.

3. Dispositif suivant l'une des revendications précédentes, **caractérisé par le fait que** les lames (37, 38) présentent des longueurs différentes de sorte que deux lames établissent le contact à des instants différents lors du montage.

4. Dispositif suivant l'une des revendications précédentes, **caractérisé par le fait que** le fond de l'appareil d'installation (33) porte des deux côtés de l'évidement dans lequel le rail de support à profil normalisé (14) s'engage après encliquetage de l'appareil d'installation (33), des nez saillants qui s'engagent dans des évidements sur le boîtier de base en vue du guidage de l'appareil d'installation (33).

5. Dispositif suivant l'une des revendications précédentes, dans lequel l'appareil d'installation (33) est placé avec un angle de l'évidement derrière une arête du rail de support à profil normalisé et est encliqueté sur le rail de support à profil normalisé par pivotement autour de cette arête, **caractérisé par le fait que** les évidements sont conformés en U sur le côté opposé à la barre collectrice, le côté ouvert de la forme en U étant tourné à l'opposé du rail de support à profil normalisé.

6. Dispositif suivant la revendication 5, **caractérisé par le fait que** l'évidement sur le côté barre collectrice du boîtier de base est une ouverture cernée dans laquelle le nez sur le fond de l'appareil d'installation peut être inséré.

7. Dispositif suivant l'une des revendications précédentes, **caractérisé par le fait qu'**au moins une barre collectrice est associée à chaque phase et qu'une barre collectrice supplémentaire associée au neutre est disposée dans le boîtier de base.

8. Dispositif suivant l'une des revendications précédentes, **caractérisé par le fait que** l'appareil d'installation présente un emplacement de coupure pour une phase et un emplacement de coupure pour le neutre et que les pièces de contact de raccordement sont disposées et réalisées de manière à toucher les contre-pièces de contact sur la barre collectrice de neutre plus tôt que celles sur les barres collectrices de phases.

9. Dispositif suivant l'une des revendications précédentes, **caractérisé par le fait que** des conducteurs de réseau sont raccordés aux barres collectrices.

10. Dispositif suivant la revendication 9, **caractérisé par le fait que** les conducteurs de réseau sont fixés par soudage ou par vis.

11. Dispositif suivant l'une des revendications 1 à 8, **caractérisé par le fait que** l'appareil d'installation est un disjoncteur de protection principal ou un disjoncteur de courant de défaut principal auquel sont raccordés les conducteurs de réseau.

12. Dispositif suivant l'une des revendications 1 à 8, **caractérisé par le fait qu'**il est prévu un composant qui correspond du point de vue contour à un appareil de commutation d'installation, dans lequel débouchent les conducteurs de réseau et qui est muni de pièces de contact de raccordement qui sont reliées aux conducteurs de réseau et qui peuvent être amenées en contact avec des contre-pièces de contact sur les barres collectrices ou sur la barre de neutre.

13. Dispositif suivant l'une des revendications précédentes, **caractérisé par le fait que** les barres collectrices sont des conducteurs en bande plate présentant des lames en saillie perpendiculairement à leur plan, auxquelles sont fixés les contre-pièces de contact.

14. Dispositif suivant l'une des revendications précédentes, **caractérisé par le fait que** le boîtier de base présente directement en dessous du rail de support à profil normalisé un espace de réception supplémentaire pour des barres collectrices supplémentaires.

15. Dispositif suivant l'une des revendications précédentes, **caractérisé par le fait que** le rail de support à profil normalisé est formé de préférence sous forme de rail de support à profil en oméga sur le boîtier de base.

16. Dispositif suivant l'une des revendications 1 à 14, **caractérisé par le fait que** le boîtier de base est encliqueté sans le rail de support à profil normalisé sur un support d'appareils portant au moins un rail de support à profil normalisé.

17. Dispositif suivant la revendications 16, **caractérisé par le fait que** le rail de support à profil normalisé est formé d'une pièce sur le support d'appareils.

18. Dispositif suivant l'une des revendications précédentes, **caractérisé par le fait que** les lames de raccordement sont disposées les unes derrière les autres dans un plan qui s'étend parallèlement aux parois latérales de l'appareil d'installation.

19. Dispositif suivant l'une des revendications 1 à 16, **caractérisé par le fait que** les lames de raccordement sont disposées parallèlement côte à côte sur l'appareil d'installation.

20. Dispositif suivant l'une des revendications 1 à 17, **caractérisé par le fait que** les lames de raccordement sont disposées avec décalage les unes derrière les autres dans des plans différents sur l'appareil d'installation.
